# EUROPEAN PATENT APPLICATION

(11) **EP 4 578 743 A1**
(43) Date of publication of application: **02.07.2025**
(21) Application number: 22956206.1
(22) Date of filing: 21.09.2022
(51) Int. Cl.: B60R 19/48

(54) **MULTIFUNCTIONAL VEHICLE BUMPER AND VEHICLE**

(30) Priority: 26.08.2022 CN 202211034347
(71) Applicant: Anhui Wollin International Co., Ltd., Wuhu, Anhui 241001 (CN)
(72) Inventor: YE, Jinsong, Wuhu, Anhui 241001 (CN); XU, Han, Wuhu, Anhui 241001 (CN)
(74) Representative: Ran, Handong
(86) International application number: PCT/CN2022/120336
(87) International publication number: WO 2024/040662

(57) **Abstract**

A multifunctional vehicle bumper, comprising a bumper body, wherein an opening is formed on the side of the bumper body distant from a vehicle body; and a box body provided with a folding box cover, the box body being arranged at the opening and connected to the bumper body by means of a sliding connection device, so that the box body is operable to slide between a first position and a second position in a direction along the opening away from or approaching the vehicle body. When the box body is at the first position, an outer side end cover thereof is substantially flush with the side face of the bumper body distant from the vehicle body, and is operable to be locked with the bumper body. When the box body is at the second position, the box body is in an open prepared state, and the folding box cover is operable to be unfolded, thus allowing a user to use an internal device and/or space of the box body. A vehicle, comprising a vehicle body and the multifunctional vehicle bumper, wherein the bumper body is mounted at the head or tail of the vehicle body and is arranged protruding outwards.

## Description

### Technical Field

The present invention relates to the field of automotive parts, and in particular to a multifunctional vehicle bumper and a vehicle comprising the multifunctional vehicle bumper.

### Background

With automobiles becoming an indispensable part of daily life, the increasing number of vehicles on the road has led to significant traffic challenges. Traffic accidents are common, and bumper assemblies, as simple yet effective protective devices, have become essential components of vehicles. Most modern automotive bumpers are integrated units attached to the vehicle frame with fasteners, and their appearance varies depending on the vehicle model. Their primary function is to minimize damage to the vehicle body, occupants, and vital components during an accident, allowing for easy replacement, while also enhancing the overall aesthetics of the vehicle. However, current bumper assemblies have relatively limited functionality, failing to meet users' diverse needs for the vehicle and bumper performance in outdoor settings. Consequently, there is an urgent need to develop a multifunctional vehicle bumper and a vehicle equipped with such a multifunctional vehicle bumper to address users' various requirements in outdoor environments.

### Summary

The embodiments of the present invention provide a multifunctional vehicle bumper and a vehicle to address the technical problem of limited functionality of vehicle bumpers that cannot meet users' diverse functional needs for multifunctional bumpers and vehicles in outdoor settings.

The purpose and technical problem solved by the present invention are achieved by the following technical solutions.

According to a first aspect of the embodiments of the present invention, a multifunctional vehicle bumper is provided, comprising:
a bumper body, an opening formed on a side of the bumper body distant from a vehicle body; and
a box body provided with a folding box cover, arranged at the opening, and connected to the bumper body by means of a sliding connection device, wherein
the sliding connection device is arranged parallel to a direction of the vehicle body, so that the box body is operable to slide between a first position and a second position in a direction along the opening away from or approaching the vehicle body;
when the box body is at the first position, an outer side end cover thereof is substantially flush with a side face of the vehicle bumper body distant from the vehicle body, and is operable to be locked with the bumper body; and
when the box body is at the second position, the box body is in an open prepared state, and the folding box cover is operable to be unfolded, thus allowing a user to use an internal device and/or space of the box body.

Optionally, the folding box cover comprises a plurality of box cover plates, which are connected via connecting pieces and are operable to be closed to a folded state or opened to a spread state by a foldable hinge.

Optionally, a foldable kitchen utensil is arranged in the box body, and the box cover plates at the top are provided with a flush mounting slot for accommodating the foldable kitchen utensil.

Optionally, the flush mounting slot comprises a recessed slot and a slot cover plate, wherein an edge of the slot comprises a step, on which the slot cover plate is placed to cover a slot opening of the slot.

Optionally, a support is arranged on a bottom of the box cover plate with a distant end thereof facing outwards.

Optionally, the box body further comprises: a main body, a lock, a handle, a support bar, and a box cover lifting mechanism, wherein
the main body is formed by enclosing a box head, a box body, and a box tail, each of which is fixed to a periphery of a box baseboard;
the box body is connected to the box head and the box tail at two ends thereof, respectively, and is constituted by symmetrically configured vertical plates;
the box cover lifting mechanism is arranged on the box head and the box tail, and are fixed to the folding box cover;
the lock and the handle are respectively arranged on an outer surface of the box head;
the support bar is a straight rod, having a length no greater than a distance between the box head and the box tail;
when the box body is closed, the support bar is contained in the box body;
when the box is opened, one end of each support bar is operable to be inserted into a small hole on the box body, and the other end is operable to be in a flexible connection with the folding box cover; and
the handle is in a flexible connection with the box body.

Optionally, the handle is a protruded push-pull handle, wherein when a protruded outer surface of the handle is impacted, the main body of the box body ejects from the opening.

Optionally, the foldable kitchen utensil comprises a plurality of foldable/deployable support legs and a foldable/deployable support platform, wherein
when the support legs and the support platform are folded, the support legs fold up to sides of the support platform; and
when the support legs and the support platform are deployed, a periphery of the support platform is connected to the plurality of support legs, the support legs being perpendicular to a surface of the support platform.

Optionally, the support platform comprises a tabletop, a support rack, and a shelf, wherein
a top surface of one end of the support rack is connected to the tabletop, and a side of the other end is connected to one side of the shelf;
the support rack comprises a tabletop support rack and a grill support rack;
the support legs are positioned on peripheries of bottom surfaces of the tabletop support rack and the grill support rack, one side of the tabletop support rack connected to one side of the grill support rack; and
the tabletop support rack is used to support the tabletop, and the grill support rack is used to support the shelf.

Optionally, the support legs each comprise an upper support sleeve, a lower support bar, and a positioning bolt, wherein
the upper support sleeve covers a top of the lower support bar, and a placement opening section is provided on a sidewall of a lower end of the upper support sleeve in a direction extending along the upper support sleeve; and
the top of the lower support bar is located within the placement opening section, and the positioning bolt can fix the lower support bar at a preset position in the placement opening section.

Optionally, the support legs each further comprise a leg folding lever, wherein
the leg folding lever comprises an upper connecting rod and a lower lifting bar, each having through-holes at both ends thereof, with a flush mounting slot being provided on a lower edge of the through-hole at a bottom end of the upper connecting rod, extending in an upward direction, and a locking pin being provided on a lower edge of the through-hole at an upper end of the lower lifting bar, extending in an upward direction, wherein,
the through-hole at the bottom end of the upper connecting rod and the through-hole at the upper end of the lower lifting bar are pivotally connected via a pivot;
when the upper connecting rod and the lower lifting bar are opened around the pivot, the locking pin on the lower lifting bar engages with the flush mounting slot on the upper connecting rod, aligning the upper connecting rod and the lower lifting bar in a straight line;
when the upper connecting rod and the lower lifting bar are closed around the pivot, the locking pin on the lower lifting bar disengages from the flush mounting slot on the upper connecting rod, leading the upper connecting rod and the lower lifting bar to rotate in a direction opposite to a direction of opening them around the pivot, thereby folding the upper connecting rod and the lower lifting bar to a closed position.

Optionally, the support legs are positioned at a bottom of the support platform, a length of the support leg after retraction being no greater than a length of the support platform.

Optionally, the multifunctional bumper further comprises lateral margins, a box mounting bracket, and a towing device, wherein
the lateral margins are fixed on both sides of the bumper body, protecting corners on a head or a tail of a vehicle;
the box mounting bracket is installed in the opening and fixed to edges of the opening;
a guiding rail is installed in the box mounting bracket, cooperating with sliding rails on the box body, which is operable to slide along the guiding rail; and
the towing device comprises a towing bar and a towing pad, the towing bar being a straight bar, with its ends fixed to a bottom of the bumper body, and the towing pad fixed to a middle of the towing bar, with an opening thereof facing a direction in which the guiding rails slide out.

According to another aspect of the present invention, a vehicle is provided, comprising a vehicle body and the aforementioned the multifunctional vehicle bumper, wherein the multifunctional vehicle bumper is mounted at a head or a tail of the vehicle body and is arranged protruding outwards.

The present invention has significant advantages and beneficial effects compared to the prior art. Through the technical solutions described above, the present invention has at least the following advantages and beneficial effects:
I. The present invention provides a multifunctional vehicle bumper comprising: a bumper body, wherein an opening is formed on the side of the bumper body distant from a vehicle body; and a box body provided with a folding box cover, arranged at the opening, and connected to the bumper body by means of a sliding connection device. The sliding connection device is arranged parallel to a direction of the vehicle body, so that the box body is operable to slide between a first position and a second position in a direction along the opening away from or approaching the vehicle body. When the box body is at the first position, an outer side end cover thereof is substantially flush with a side face of the bumper body distant from the vehicle body, and is operable to be locked with the bumper body. When the box body is at the second position, the box body is in an open prepared state, and the folding box cover is operable to be unfolded, thus allowing a user to use an internal device and/or space of the box body. The box body is operable to be used as a crash buffer layer for the bumper body, providing protection for the bumper body, the bumper itself, the vehicle, and the occupants.
II. The present invention provides a foldable kitchen utensil housed within the box body, with a flush mounting slot formed on the box cover plates on the top for accommodating the foldable kitchen utensil. When the box body is at the second position, the box is in an open prepared state, and the folding cover plate is operable to be expanded, allowing the user to access the internal devices and/or space within the box body. The foldable kitchen utensil can be used by the occupants for cooking outdoors. When the multifunctional bumper is rear-ended, the box is triggered and bursts, ejecting towards the tail of the vehicle to cushion high-speed impacts in case of an accident. In the meantime, the bumper body itself, the box body, and the foldable kitchen utensil together provide appropriate protection for the vehicle and its occupants.
III. When the box body is at the first position, an outer side end cover thereof is flush with the side face of the bumper body distant from the vehicle body, and is operable to be locked with the bumper body. When the box body at the first position is impacted, it ejects from the first position to the second position to provide cushioning and protection against the collision.
IV. The present invention provides a folding box cover with a first cover plate and a second cover plate, wherein the first and second cover plates may be opened via the foldable hinge and spread to a flat, horizontal plane. At this point, the first and second cover plates are horizontally connected by the foldable hinge, forming a support platform that can be used in various tasks.

The above description is merely an overview of the technical solutions of the present invention. In order to understand the technical means of the present invention more clearly and enable its implementation according to the description, and to make the purposes, features, and advantages of the present invention more apparent and comprehensible, the following preferred embodiments are specifically presented, accompanied by drawings, and explained in detail as follows.

### Brief Description of Drawings

Fig. 1a is a structural schematic diagram of a box body on a multifunctional vehicle bumper in a first position according to the embodiments of the present application;
Fig. 1b is a structural schematic diagram of the multifunctional vehicle bumper fully opened in a second position according to the embodiments of the present application;
Fig. 2a is a structural schematic diagram of the multifunctional vehicle bumper in the second position according to the embodiments of the present application;
Fig. 2b is a structural schematic diagram of the box body on the multifunctional vehicle bumper in a fully opened state according to the embodiments of the present application;
Fig. 3a is a structural schematic diagram of a folding box cover in a folded state according to the embodiments of the present application;
Fig. 3b is a structural schematic diagram of the folding box cover in an opened state according to the embodiments of the present application;
Fig. 4 is a structural schematic diagram of the box body in an opened state according to the embodiments of the present application;
Fig. 5 is a structural schematic diagram of a box cover lifting mechanism in an opened state according to the embodiments of the present application;
Fig. 6 is a structural schematic diagram of the box cover lifting mechanism in a folded state according to the embodiments of the present application;
Fig. 7 is a structural schematic diagram of a support bar according to the embodiments of the present application;
Fig. 8a is a structural schematic diagram of a foldable kitchen utensil in a closed state according to the embodiments of the present application;
Fig. 8b is a structural schematic diagram of an internal structure of the foldable kitchen utensil in a closed state according to the embodiments of the present application;
Fig. 9 is a structural schematic diagram of the foldable kitchen utensil in an opened state according to the embodiments of the present application;
Fig. 10 is an exploded schematic diagram of a structure of the foldable kitchen utensil according to the embodiments of the present application;
Fig. 11a is a structural schematic diagram of a leg folding lever according to the embodiments of the present application;
Fig. 11b is a structural schematic diagram of another leg folding lever according to the embodiments of the present application;
Fig. 12 is a structural schematic diagram of a multifunctional vehicle bumper according to the embodiments of the present application;
Fig. 13 is a structural schematic diagram of a vehicle and a multifunctional vehicle bumper according to the embodiments of the present application; and
Fig. 14 is a schematic flowchart of an application method of a multifunctional vehicle bumper according to the embodiments of the present application.

**Reference Signs**

| | | | |
|---|---|---|---|
| 1: | Bumper body | 2: | Box body |
| 21: | Folding box cover | 211: | First box cover plate |
| 2111: | Square flush mounting slot | 2112: | Oval flush mounting slot |
| 2113: | Square cushion block | 212: | Second box cover plate |
| 213: | Foldable hinge | 22: | Main body |
| 221: | Box baseboard | 222: | Box head |
| 223: | Box casing | 224: | Box tail |
| 225: | Sliding rail | | |
| 23: | Lock | 24: | Handle |
| 25: | Support bar | 251: | Support bar head |
| 252: | Support bar head | 26: | Box cover lifting mechanism |
| 261: | Lifting plate | 2611: | Through hole |
| 2612: | Notch | 2621: | First lifting arm |
| 26211: | Location hole | 2622: | Second lifting arm |
| 263: | Lifting arm support | 2631: | Mounting hole |
| 3: | Opening | | |
| 4: | Foldable kitchen utensil | 41: | Support leg |
| 411: | Upper support sleeve | 4111: | Placement opening section |
| 412: | Lower support bar | 413: | Positioning bolt |
| 414: | Leg folding lever | 4141: | Upper connecting rod |
| 41411: | Flush mounting slot | 41421: | Locking pin |
| 4142: | Lower lifting bar | | |
| 42: | Support platform | 421: | Tabletop |
| 422: | Support rack | | |
| 4221: | Table support rack | 4222: | Grill support rack |
| 423: | Shelf | | |
| 5: | Lateral margin | 6: | Box mounting bracket |
| 61: | Guiding rail | 71: | Towing bar |
| 72: | Towing pad | | |
| 7: | Towing device | 8: | Vehicle body |

### Detailed Description

To further elaborate on the technical means and effects employed by the present application to achieve its intended purpose, the specific embodiments, structure, features, and functions of the multifunctional vehicle bumper proposed according to the present application will be detailed below, with reference to the accompanying drawings and preferred embodiments.

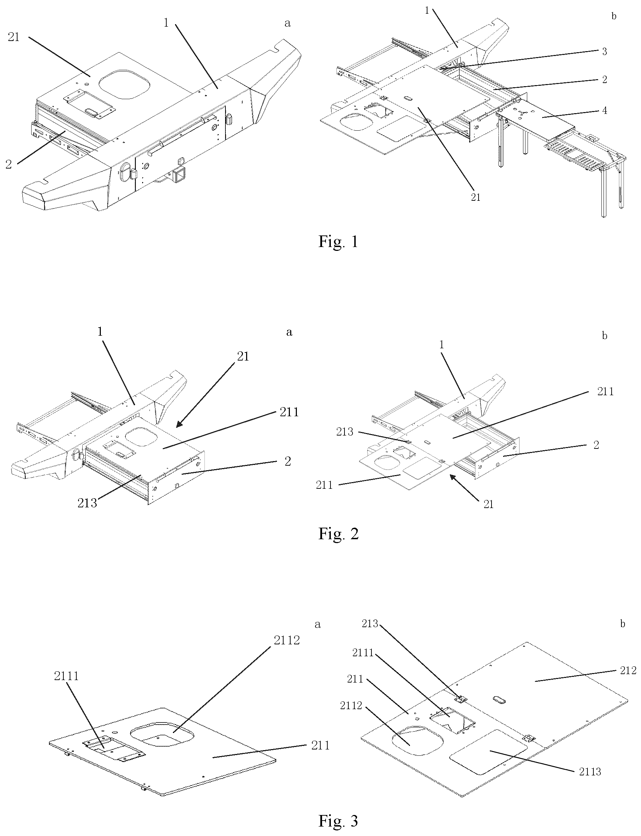

In an embodiment of the present invention, as shown in Figs. 1a and 1b, a multifunctional vehicle bumper is provided. The multifunctional vehicle bumper includes: a bumper body 1, an opening 3 formed on a side of the bumper body distant from a vehicle body; and a box body 2 provided with a folding box cover 21 arranged at the opening 3 and connected to the bumper body 1 by means of a sliding connection device. The sliding connection device is arranged parallel to a direction of the vehicle body, so that the box body 2 is operable to slide between a first position and a second position in a direction along the opening 3 away from or approaching the vehicle body. When the box body 2 is at the first position, an outer side end cover thereof is substantially flush with a side face of the bumper body 1 distant from the vehicle body, and is operable to be locked with the bumper body 1. When the box body 2 is at the second position, the box body 2 is in an open prepared state, and the folding box cover 21 is operable to be unfolded, thus allowing a user to use an internal device and/or space of the box body 2. For example, a foldable kitchen utensil 4 is operable to be arranged inside the box body 2. The foldable kitchen utensil 4 has a certain space inside, and when in a closed state, it serves as an impact-absorbing layer for the bumper body 1 to protect the bumper body 1 or the bumper, as well as the vehicle and its occupants. Alternatively, no other devices may be set inside the box body 2, and the internal space thereof allows users to store items. When the multifunctional vehicle bumper is in a closed state, as shown in Fig. 1a, the foldable kitchen utensil 4 is folded and placed inside the box body 2, the folding box cover 21 covers the box body 2, which is accommodated inside the opening 3, and one side of the box body 2 is flush with a tail-facing side of the bumper body 1.

When the multifunctional vehicle bumper is in an opened state, as shown in Fig. 1b, the box body 2 is located on an outer side the opening 3 facing the tail of the vehicle, the folding box cover 21 opens and horizontally spreads out above the box body 2 at an angle, and the foldable kitchen utensil 4 is in an expanded state and connected to a tail-facing side of the box body 2.

The foldable kitchen utensil 4 can be used by the occupants in the vehicle to cook outdoors. Furthermore, when the multifunctional vehicle bumper is rear-ended, the box body 2 will be triggered to undergo a mild, controlled explosion and eject toward the tail of the vehicle, which serves to buffer high-speed impact in case of a car crash while simultaneously providing appropriate protection for the vehicle and its occupants through the bumper body 1, box body 2, and the foldable kitchen utensil 4.

In an embodiment of the present application, as shown in Figs. 2a and 2b, a folding box cover 21 is provided, which includes two box cover plates, from top to bottom being a first box cover plate 211 and a second box cover plate 212. Edges of the first box cover plate 211 and the second box cover plate 212 are respectively fixed to mounting holes on hinges on edges of connecting pieces via bolts. The first box cover plate 211 and the second box cover plate 212 are connected via a connecting piece. In a preferred embodiment, the connecting piece is a foldable hinge 213. The first box cover plate 211 and the second box cover plate 212 are sequentially connected through the foldable hinge 213, and when not in use, the first box cover plate 211 and the second box cover plate 212 on the folding box cover 21 are closed to a superimposed position around the foldable hinge 213, as shown in Fig. 2a. At this point, the first box cover plate 211 superimposes on the second box cover plate 212, and the folding box cover 21 in a superimposed state can cover an upward-facing opening of the box body 2. While in use, the first box cover plate 211 and the second box cover plate 212 on the folding box cover 21 can be opened around the foldable hinge 213 to a horizontal plane. At this point, the first box cover plate 211 and the second box cover plate 212 are horizontally connected through the foldable hinge 213, as shown in Fig. 2b. At this time, the horizontally expanded folding box cover can serve as a support platform to place food, computer, or cooking ware on the horizontal folding box cover, allowing the occupants to perform related work and assembly tasks.

As shown in Fig. 3, in an embodiment of the present application, a foldable kitchen utensil 4 is provided inside the box body 2. The foldable kitchen utensil 4 is accommodated inside the box body 2, which is covered by the folding box cover 21. The folding box cover 21 includes the first box cover plate 211 and the second box cover plate 212. A flush mounting slot for matching and accommodating the foldable kitchen utensil is set on the first box cover plate 211 on the top. The aforementioned flush mounting slot can be configured in plural. As shown in Figs. 3a and 3b, the flush mounting may be a square flush mounting slot 2111 or an oval flush mounting slot 2112, or a square cushion block 2113 provided on the back of the first box cover plate 211. A movable snap-on clamp is fixed to an inner edge of the square flush mounting slot 2111 by bolts. A size of the slot of the movable snap-on clamp may be adjusted according to a size of the foldable kitchen utensil, allowing the foldable kitchen utensil to be fixed in a slot of the square flush mounting slot 2111 matching the snap-on clamp. The oval flush mounting slot 2112 may be used to secure a foldable kitchen utensil with an oval or circular bottom. The square cushion block 2113, which is arranged on the back surface of the first box cover plate 211, is used for insulating hot foldable kitchen utensil. The folded first box cover plate 211 and second box cover plate 212 may be opened to a horizontal plane around the foldable hinges 213. On the upper surface where the second box cover plate 212 contacts the first box cover plate 211, there is a raised portion in an area of the square flush mounting slot 2111 on the first box cover plate 211 for supporting or cooperating with the square flush mounting slot 2111 to secure the foldable kitchen utensil placed on the square flush mounting slot 2111.

In an embodiment of the present application, a recessed slot and a slot cover plate are provided on the flush mounting slot. An edge of the slot has a step, and the slot cover plate is placed on the step to cover a slot opening of the slot. As an optional embodiment, the first box cover plate 211 may also be fixed to the edge of the second box cover plate 212 via bolts and nuts. The first box cover plate 211 may also be provided with a recessed slot and a slot cover plate, but this will not be described further here.

As an optional embodiment, a support is arranged on a bottom of the box cover plate with a distant end thereof facing outwards. The support may be a straight rod vertically oriented to support the box cover plate, or positioned at an angle, with one end connected to a sidewall of the folding box cover and the other end to the bottom of the box cover plate. The length of the support can be adjusted as needed. The supports are used to support the box cover plate.

As an optional embodiment, the first box cover plate may also be composed of two parallel cover plates in contact with each other. A contact line between the two cover plates is aligned with a withdrawing direction of the folding box cover 21. The cover plate on one side of the first box cover plate is fixed, while the cover plate on the other side can rotate 90° upwards around the contact line of the two cover plates to become perpendicular to the fixed cover plate. The second box cover plate 212 can be positioned at an edge of the fixed cover plate facing outwards, serving as a platform for placing items. The rotatable cover plate can be flipped 90° to open the folding box cover 21, allowing the foldable kitchen utensil stored inside the folding box cover 21 to be taken out.

As an optional embodiment, the aforementioned box body 2 in a vehicle trunk may also be applicable for assembling the bumper structure. The box body 2 may also be a movable box in the vehicle trunk. The movable box body 2 allows for a multifunctional vehicle bumper to be installed to its external structure, and it may also be applied in a vehicle equipped with the multifunctional vehicle bumper. Furthermore, the aforementioned movable box body 2 may have the same internal structure with the box body 2 described above and is used for storage or accommodating the foldable kitchen utensil 4. Alternatively, the external structure of the aforementioned movable box body 2 may also match the aforementioned multifunctional vehicle bumper as needed, allowing the opening 3 of the multifunctional vehicle bumper to have broader adaptability.

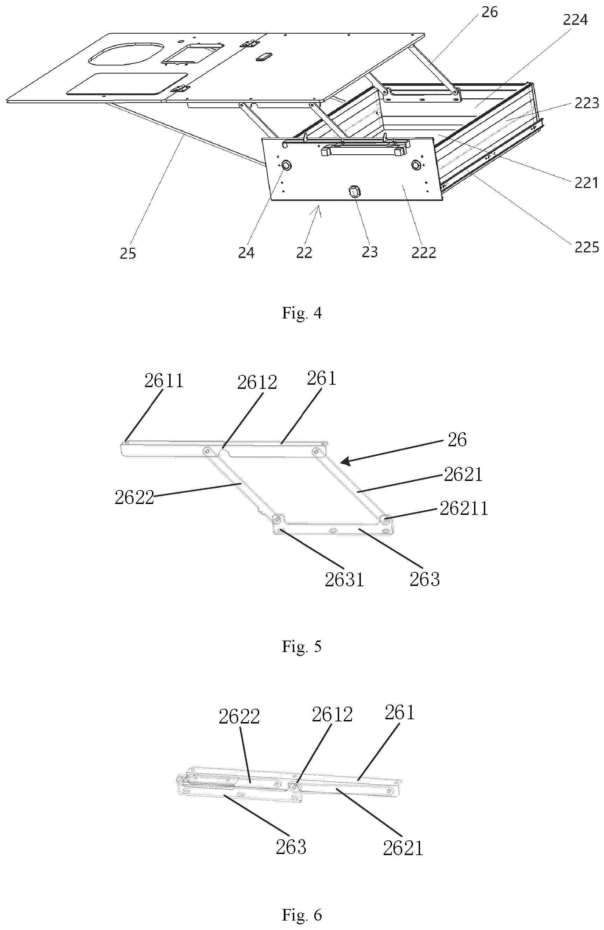

As shown in Fig. 4, in an embodiment of the present application, the box body 2 further includes a main body 22, a lock 23, a handle 24, a support bar 25, and a box cover lifting mechanism 26. The main body 22 is formed by enclosing a box head 222, a box casing 223, and a box tail 224, which are fixed to a periphery of a box baseboard 221. The box casing 223 is connected to the box head 222 and the box tail 224 at its two ends, respectively, and is constituted by symmetrically configured vertical plates, with sliding rails 225 provided on outer sides of the vertical plates. The box cover lifting mechanism 26 is arranged on inner walls of the box head 222 and the box tail 224, and is fixed to the box cover 21 or fixed to a baseboard of folding box cover 21.

As shown in Figs. 5 and 6, in an embodiment of the present application, the box cover lifting mechanism 26 includes two lifting arms and a lifting plate 261 on top of the two lifting arms. The lifting arms are respectively a first lifting arm 2621 and a second lifting arm 2622 arranged substantially in parallel. Bottom ends of the first lifting arm 2621 and the second lifting arm 2622 are respectively provided with location holes 26211, through which the first lifting arm 2621 and the second lifting arm 2622 are respectively in a flexible connection with the inner walls of the box head 222 and the box tail 224. Lifting ends of the first lifting arm 2621 and the second lifting arm 2622 are connected to the lifting plate 261. The first lifting arm 2621 and the second lifting arm 2622 can rotate around their respective location holes 26211, allowing the lifting plate 261 to rise or fall at the lifting ends of the first lifting arm 2621 and the second lifting arm 2622. To enable the box cover lifting mechanisms 26 to lift or fall within a small range, and to increase a lateral offset of the second box cover plate 212 fixed to the lifting plate towards the box head 222 and the box tail 224, the lifting plate 261 extends to a proper length in the direction of offset. A length of extension of the lifting plate 261 is determined by widths of the box head 222 and the box tail 224 on the box body 2. Lengths of the first lifting arm 2621 and the second lifting arm 2622 are determined by the widths of the box head 222 and box tail 224 on the box body 2, a distance between the first lifting arm 2621 and the second lifting arm 2622, and a length of the lifting plate 261. The box cover lifting mechanism 26 further includes a lifting arm support 263, which is in a flexible connection with the two lifting arms, respectively. The lifting arm support 263 is provided with mounting holes 2631, which can be fixed to the inner walls of the box head 222 and box tail 224 by bolts.

In an embodiment of the present application, the lifting plate 261 includes a first lifting plate and a second lifting plate. The first lifting plate is connected to the lifting arm close to the box head 222. The first lifting plate is an L-shaped steel plate. A vertical edge of the L-shaped steel plate is connected to the first lifting arm 2621 and the second lifting arm 2622, while a horizontal edge of the steel plate facing the box head 222, and a side of the vertical edge of the steel plate close to the box head 222 are in a flexible connection with the first lifting arm 2621 and the second lifting arm 2622. The location holes 2631 at both ends of a side of the lifting arm support 263 distant from the box head 222 are respectively in a flexible connection with the first lifting arm 2621 and the second lifting arm 2622. The width of the horizontal edge of the steel plate is consistent with a width formed by the first lifting arm 2621, the second lifting arm 2622, and the vertical edge of the steel plate. This configuration enables a lower end of the box cover lifting mechanism 26 to be shielded by the horizontal steel plate when the first lifting plate descends to contact the lifting arm support 263.

The second lifting plate is connected to the lifting arm close to the box tail 224. The second lifting plate is an L-shaped steel plate, with a vertical edge thereof connected to the first lifting arm 2621 and the second lifting arm 2622, and a horizontal edge thereof facing the box tail 224. A side of the vertical edge of the steel plate closer to the box tail 224 is in a flexible connection with the first lifting arm 2621 and the second lifting arm 2622. The location holes 2631 at both ends on the side of the lifting arm support 263 distant from the box tail 224 are respectively in a flexible connection with the first lifting arm 2621 and the second lifting arm 2622. The width of the horizontal edge of the steel plate is consistent with a width formed by the first lifting arm 2621, the second lifting arm 2622, and the vertical edge of the steel plate. This configuration enables a lower end of the box cover lifting mechanism 26 to be shielded by the horizontal steel plate when the second lifting plate descends to contact the lifting arm support 263.

When the first lifting plate and the second lifting plate approach their respective lifting arm supports 263, a notch on the lifting plate 261 precisely engages with a protrusion where the first lifting arm 2621 is in a flexible connection with the lifting arm support 263, allowing the lifting plate 261 and the lifting arm support 263 to be superimposed and placed in a horizontal position.

The lock 23 and the handle 24 are arranged on an outer surface of the box head 22. For example, the lock 23 may be a fingerprint lock, used to prevent the box body 2 from being removed from the opening 3.

The support bar 25 is a straight rod, with a length no greater than the distance between the box head 222 and the box tail 224. When the box body 2 is closed, the support bar is placed inside the box body 2. When the box body 2 is opened, one end of the support bar 25 is inserted in a small hole on the box casing 223, and the other end is in a flexible connection with the folding box cover plate 21. Both ends of the surface of the box head 222 are provided with a round hole. Handles 24 are installed in these round holes and are in flexible connections with the box casing 223. When the box body 2 ejects outwards, two support bars 24 are operable to be ejected from the round holes respectively.

In an embodiment of the present application, the handle 24 is a protruded push-pull handle. When a protruded outer surface of the handle 24 is impacted, the main body of the box body 2 ejects from the opening 3 towards the tail of the vehicle. The push-button handle is used to open the box body 2 with a folding cover plate 21 located on the side of the bumper body 1 distant from the tail of the vehicle. Alternatively, in case of a rear-end collision, the protruded push-button handle is triggered, causing the main body of the box body 2 to spring between the collided vehicles, providing a buffer. This also opens the multifunctional structure inside the box body 2, providing impact absorption and collision prevention to minimize damage of the vehicle and ensure the safety of the occupants.

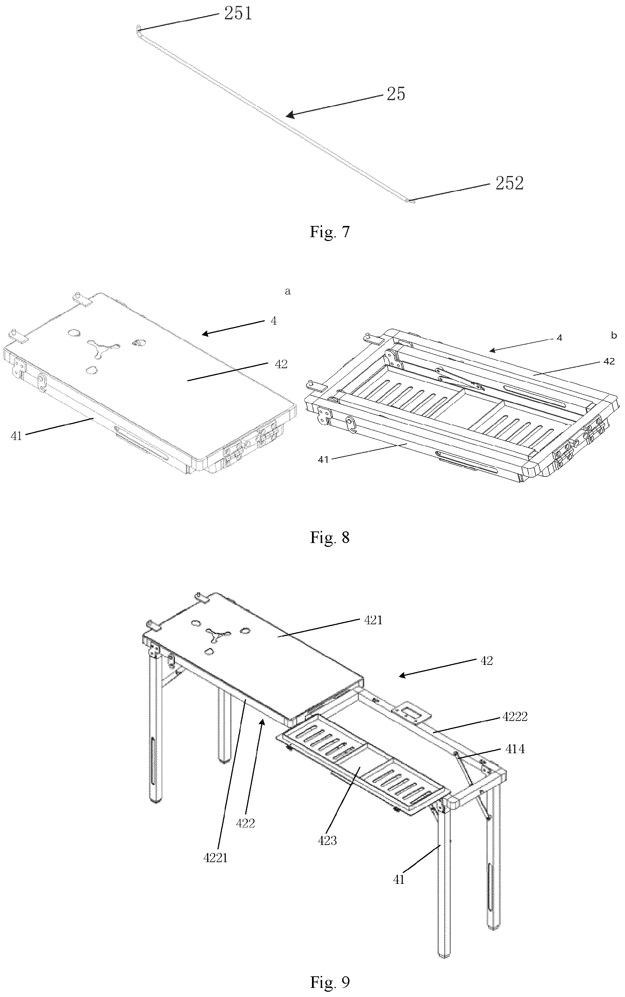

As shown in Fig. 7, in an embodiment of the present application, the support bar 25 includes a support bar body and a support bar head. Both ends of the support bar body are respectively provided with a support bar head 251 and a support bar head 252. The support bar heads 251 and 252 are bent and each include an insertion section and a blocking section. A diameter of the insertion section is smaller than a diameter of the small hole set on the outer side of the box casing 223 offset toward the folding box cover 21 and a diameter of the small hole on the bottom of the first box cover plate 211. The insertion section can be inserted into the aforementioned small holes. The blocking section is set between the insertion section and the support bar body to block further insertion of the support bar head into the aforementioned small holes, thereby allowing the box casing 223 to support the support bar body, and the support bar body to support the first box cover plate 211.

The support bar 25 is placed in a space above the sliding rails 225. After the box body 2 is completely removed from the opening 3, the support bar 25 is operable to be removed from the space above the sliding rails 225. When the folding box cover 21 is pressed, the cover plate lifting mechanisms 26 lift the folding box cover 21 to a suitable height, then the first box cover plate 211 is turned open to be flush with the second cover plate 212. At this point, one end of the support bar 25 is inserted into the small hole set on the outer side of the box casing 223 in the direction offset toward the folding box cover 21, and the other end is inserted into the small hole on the bottom of the first box cover plate 211. The box casing 223 forms a support structure for the first box cover plate 211 via the support bar 25.

In an embodiment of the present application, the foldable kitchen utensil includes: a plurality of support legs that can be folded or deployed, and a support platform that can be folded or deployed. When the support legs and the support platform are folded, the support legs fold up to the sides of the support platform; when the support legs and the support platform are deployed, the periphery of the support platform is connected to the plurality of support legs, and the support legs are perpendicular to the support platform surface.

As shown in Figs. 8a and 8b, in an embodiment of the present application, the foldable kitchen utensil may be a barbecue grill 4. This barbecue grill 4 includes a plurality of long, straight support legs 41 and a support platform 42 that can be folded or deployed into a vertical position. When the support legs 41 and the support platform 42 are folded, the support legs 41 fold up to the sides of the support platform 42. As shown in Fig. 9, when the support legs 41 and the support platform 42 are deployed, the periphery of the support platform 42 is connected to the plurality of support legs 41, and the support legs 41 are perpendicular to the support platform surface.

As shown in Fig. 9, in an embodiment of the present application, the support platform 42 includes a tabletop 421, a support rack 422, and a shelf 423. A top surface on one end of the support rack 422 is connected to the tabletop 421; a side face of the other end is connected to one side of the shelf 423. The support rack 422 includes a tabletop support rack 4221 and a grill support rack 4222. Support legs 41 are respectively provided on peripheries of bottom surfaces of the tabletop support rack 4221 and the grill support rack 4222, and one side of the tabletop support rack 4221 is connected to one side of the grill support rack 4222. The tabletop support rack 4221 is used to support the tabletop 421, and the grill support rack 4222 is used to support the shelf 423.

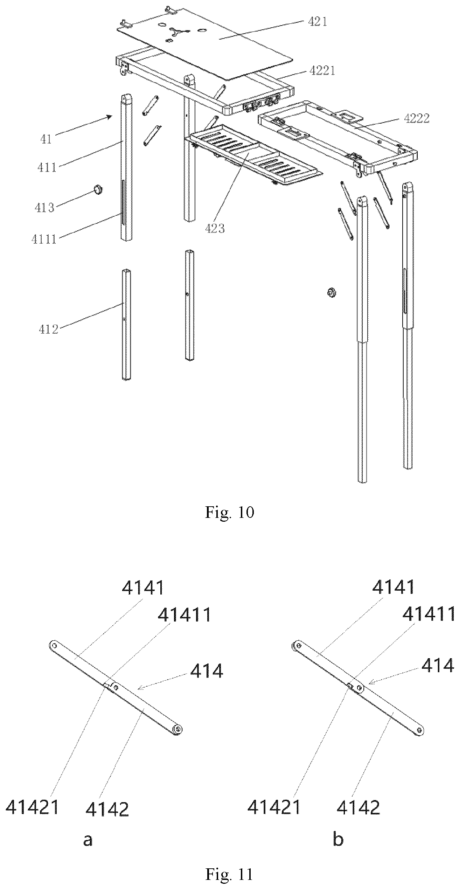

As shown in Fig. 10, in an embodiment of the present application, the support legs 41 each include an upper support sleeve 411, a lower support bar 412, and a positioning bolt 413. The upper support sleeve 411 covers a top of the lower support bar 412. A placement opening section 4111 is provided on a sidewall of a lower end of the upper support sleeve 411 in a direction extending along the upper support sleeve. The top of the lower support bar 412 is located within the placement opening section 4111, and the positioning bolt can fix the lower support bar 412 at a preset position in the placement opening section 4111.

As shown in Figs. 11a and 11b, in an embodiment of the present application, the support legs 41 each further include a leg folding lever 414. The leg folding lever 414 includes an upper connecting rod 4141 and a lower lifting bar 4142, each having through-holes at both ends thereof. A flush mounting slot 41411 is provided on a lower edge of the through-hole at a bottom end of the upper connecting rod 4141, facing an upward extension direction. A locking pin 41421 is provided on a lower edge of the through-hole at an upper end of the lower lifting bar 4142, facing an upward extension direction. The through-hole at the bottom end of the upper connecting rod 4141 and the through-hole at the upper end of the lower lifting bar 4142 are pivotally connected via a pivot.

When the upper connecting rod 4141 and the lower lifting bar 4142 rotate to an open position around the pivot, the locking pin on the lower lifting bar engages with the flush mounting slot 41411 on the upper connecting rod, aligning the upper connecting rod 4141 and the lower lifting bar 4142 in a straight line, preventing further rotation around the pivot. When the upper connecting rod 4141 and the lower lifting bar 4142 rotate around the pivot to a close position, the locking pin disengages from the flush mounting slot 41411 on the upper connecting rod, allowing the upper connecting rod 4141 and the lower lifting bar 4142 to rotate in a direction opposite to the direction of opening, thus folding the upper and lower lifting bar to a close position.

Fig. 11a is a structural schematic of the leg folding lever 414 according to an embodiment of the present application, and Fig. 11b is a structural schematic of the leg folding lever 414 according to another embodiment of the present application. As a preferred embodiment, the structures shown in Figs. 11a and 11b can be respectively positioned on inner surfaces of the support legs 41 facing the foldable kitchen utensil. When the locking pin 41421 on the lower lifting bar 4142 engages with the flush mounting slot 41411 on the upper connecting rod 4141, an end face of the locking pin 41421 faces inward toward the foldable kitchen utensil. This structure allows the upper connecting rod 4141 and the lower lifting bar 4142 to fold and overlap when the leg folding lever 414 is deployed as a support or folded to a closed state.

In an embodiment of the present application, the support legs 41 are positioned at both ends or an edge of a middle section of the bottom of the support platform 42, and a length of each support leg 41 after retraction is no greater than a length of the support platform. For example, the support legs 41 can be positioned at corners of both ends of the support platform 42. When folding up the opened foldable kitchen utensil, the support legs at the corners of both ends of the support platform 42 are bent 90° towards the middle section of the support platform 42 until they are substantially parallel and in contact with the support platform 42. Similarly, the support legs 41 can also be positioned at the edge of the middle section of the support platform 42. The support platform 42 is connected to the folding box cover 21 at a side thereof facing the folding box cover 21, and the folding box cover 21 and the support legs 41 on the middle section of the support platform 42 are used to support the support platform 42. The connection between the support legs 41 and the support platform 42 is determined by the actual connection and support needs, and will not be described further here.

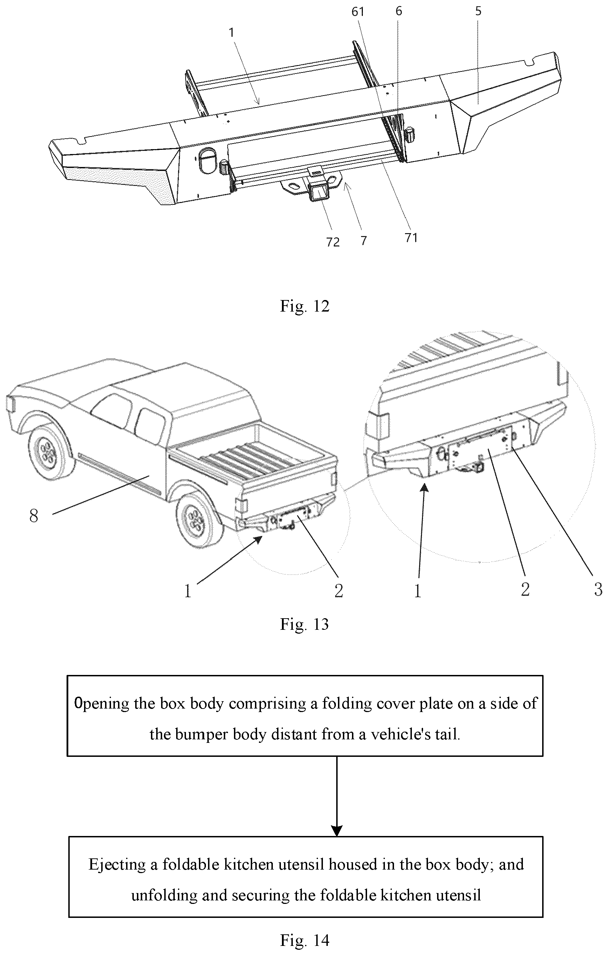

As shown in Fig. 12, in an embodiment of the present application, the multifunctional vehicle bumper further includes lateral margins 5, a box mounting bracket 6, and a towing device 7. Lateral margins 5 are fixedly mounted on both sides of the bumper body 1 for protecting the two lateral corners of the vehicle tail. The box mounting bracket 6 is positioned in the opening 3 and fixed to the edge of the opening 3. Guiding rails 61 are provided in the box mounting bracket 6 to cooperate with the sliding rails 225 provided on the box body 2. The sliding rails 225 are operable to slide along the guiding rails 61. The towing device 7 includes a towing bar 71 and a towing pad 72. The towing bar 71 is a straight bar, with both ends thereof fixedly connected to the bottom of the bumper body 1. The towing pad 72 is fixedly connected to a middle part of the towing bar 71, and an opening of the towing pad 72 faces a direction in which the guiding rails 61 slide out.

As shown in Fig. 13, in an embodiment of the present application, a vehicle is further provided. The vehicle includes a vehicle body 8 and the multifunctional vehicle bumper described above. The bumper body 1 is mounted on a head or a tail of the vehicle body 8, and is arranged protruding outwards. For example, the box body 2 is located at an opening 3 provided on the bumper body 1 and is operable to slide along the opening 3.

As shown in Fig. 14, in an embodiment of the present application, a method for applying the aforementioned multifunctional vehicle bumper is further provided. This method includes the following steps: opening the box body 2, the box body 2 comprising a folding cover plate 21 on a side of the bumper body 1 distant from the vehicle's tail, to prepare for shifting the box body from a first position to a second position; shifting the box body from the first position to the second position, and ejecting the foldable kitchen utensil housed in the box body; and unfolding and securing the foldable kitchen utensil.

In an embodiment of the present application, the step of opening the box body 2 comprises: pressing a start switch on the box head 222 of the box body 2; sliding out the box body 2; raising the folding cover plate 21 to a preset height via the cover plate lifting mechanism 26; unfolding the cover plate plates on the folding cover plate 21; and supporting a free end of the unfolded cover plate using the support bars 25.

The start switch is provided on the box head 222 of the box body 2. The start switch includes a lock 23 and a handle 24 mounted on the box head 222 of the main body 22 of the box body 2. The lock 23 is a fingerprint lock, which, once being pressed by a fingerprint, directly allows the box body 2 to open outwards along the opening on the box body 2. Specifically, the box body 2 is operable to slide out along the guiding rails 61 on the box mounting bracket 6 on the edge of the opening, in a direction to the vehicle tail along the sliding rails 225. Alternatively, the box body 2 is operable to slide out of the guiding rails 61 on the box mounting bracket 6 by pressing the handles 24. The aforementioned fingerprint lock guarantees safe opening of the box body 2. In the meantime, the push-button handle is used to open box body 2 comprising a folding cover plate 21 on the side of the bumper body 1 distant from the vehicle tail. In the event of a rear-end collision, the protruding push-button handle is triggered, causing the main body of box body 2 to eject via a spring mechanism, acting as a buffer between the colliding vehicles. This opens the multifunctional structure within box body 2, providing impact absorption and reducing damage, thereby ensuring the safety of vehicle occupants.

Said sliding out the box body 2 comprises sliding out the box body 2 along the guiding rails 61 on the box mounting rack 6 in the opening 3, via sliding rails 225 on the box casing 223, to a position outside the opening 3.

The lifting mechanism 26 raises the two lifting arms, lifting the lifting plate 261 at the top of the two lifting arms to a preset height. The first cover plate 211 on the folding cover plate 21 then rotates 180°, becoming flush with a plane of the second cover plate 212. At this point, the cover plates on the folding cover plate 21 are fully opened.

The support bars 25 are removed from the space above the sliding rails 225 inside the box body 2. One end of each support bar 25 is inserted into the small hole provided on the outer side of the box casing 223, which offsets towards the folding cover plate 21; the other end is inserted into the small hole on the bottom of the first box cover plate 211. The box casing 223, via the support bars 25, forms a support structure for the first box cover plate 211, supporting the free end of the opened first box cover plate 211.

In an embodiment of the present application, the steps of ejecting the foldable kitchen utensil housed in the box body and deploying and securing the foldable kitchen utensil include: ejecting a foldable kitchen utensil 4 in the direction in which the box body 2 slides out; opening a support platform 42 on the foldable kitchen utensil 4; opening multiple support legs 41 connected to the periphery of the support platform 42 and securing the support platform 42; and opening a shelf 423 to a preset position.

The step for ejecting the foldable kitchen utensil 4 in the direction in which the box body 2 slides out includes: ejecting the foldable kitchen utensil 4 from an outlet on the box head 222 of the box body 2 by the action of an elastic component (not shown in the drawings) in the box body 2; engaging a locking pin on an end of the ejected foldable kitchen utensil 4 with a snap-on clamp on the box head 222; unfolding the support platform 42 on the foldable kitchen utensil 4; and rotating the support rack 422 and the shelf 423 at the bottom of the support platform 42 for 180° around a pivot at one end, so that the support rack 422 and the shelf 423 are unfolded to be substantially parallel to the tabletop 421. Then, the plurality of support legs 41 on one side of the support platform 422 and the shelf 423 are unfolded, and the folded upper support sleeve 411, lower lifting bar 412, and the positioning bolt 413 on each support leg 41 are opened. The height of each support legs 41 is adjusted to match the height of the box body 2 and secure them. Next, the plurality of support legs 41 connected to the periphery of the support platform 42 are unfolded, and the positioning bolts 413 are adjusted, and the height of each support platform 42 is fixed. Finally, the shelf 423, which is mounted on the support platform422, is rotated via hinges along its edges for 180° to unfold and position it parallel to the support platform 422. The shelf 423 has now been unfolded in the preset position.

Those skilled in the art will appreciate that, to address technical issue in achieving a good user experience, this embodiment of the present application may also include structures such as a bumper body 1, a box body 2 with a folding cover plate 21, and foldable kitchen utensil 4 that is operable to be ejected or opened. These structures are also encompassed within the scope of protection of the preferred embodiments of the present invention. Detailed descriptions and technical effects of this embodiment can be found in the corresponding descriptions of the preceding embodiments and will not be repeated here.

In another aspect of the invention, a vehicle including a vehicle body and the aforementioned multifunctional vehicle bumper is further provided. The bumper body is mounted on the tail of the vehicle body and is arranged protruding outwards. The box body is positioned in an opening provided on the bumper body and is operable to slide along the opening. This allows the vehicle tail to utilize the multifunctional vehicle bumper according to the aforementioned method when rear-ended or when used for cooking outdoors. The beneficial effects achieved are the same as those described for the corresponding device and method above and will not be repeated here.

The above description are preferred embodiments of the present invention and not intended to limit the scope of the invention in any way. The preferred embodiments disclosed above shall not constitute any limit to the scope of the present invention. Those skilled in the art will readily appreciate that various modifications and alterations can be made to the disclosed embodiments without departing from the scope of the present invention. Any simple modification, equivalent changes and modifications made to the above embodiments based on the technical essence of the preferred embodiments of the present invention without departing from the technical solutions of the preferred embodiments of the present invention shall still fall within the scope of the technical solutions of the preferred embodiments of the present invention.

## Claims

1. A multifunctional vehicle bumper, comprising:
a bumper body, an opening formed on a side of the bumper body distant from a vehicle body; and
a box body provided with a folding box cover, the box body arranged at the opening, and connected to the bumper body by means of a sliding connection device, wherein
the sliding connection device is arranged parallel to a direction of the vehicle body, so that the box body is operable to slide along the opening between a first position and a second position in directions away from or approaching the vehicle body;
when the box body is at the first position, an outer side end cover thereof is substantially flush with a side face of the vehicle bumper body distant from the vehicle body, and is operable to be locked with the bumper body; and
when the box body is at the second position, the box body is in an open prepared state, and the folding box cover is operable to be unfolded, thus allowing a user to use an internal device and/or space of the box body.

2. The multifunctional vehicle bumper according to claim 1, wherein the folding box cover comprises a plurality of box cover plates, which are connected at edges thereof via connecting pieces and are operable to be closed to a folded state or opened to a spread state.

3. The multifunctional vehicle bumper according to claim 2, wherein the box body comprises a foldable kitchen utensil, and the box cover plates at the top are provided with a flush mounting slot for accommodating the foldable kitchen utensil.

4. The multifunctional vehicle bumper according to claim 3, wherein the flush mounting slot comprises a recessed slot and a slot cover plate, and an edge of the slot comprises a step, on which the slot cover plate is placed to cover a slot opening of the slot.

5. The multifunctional vehicle bumper according to claim 2, wherein a support is arranged on a bottom of the box cover plate with a distant end thereof facing outwards.

6. The multifunctional vehicle bumper according to claim 1, wherein:
the box body further comprises: a main body, a lock, a handle, a support bar, and a box cover lifting mechanisms;
the main body is formed by enclosing a box head, a box body, and a box tail, each of which is fixed to a periphery of a box baseboard;
the box body is connected to the box head and the box tail at two ends thereof, respectively, and is constituted by symmetrically configured vertical plates;
the box cover lifting mechanism is arranged on the box head and the box tail, and are fixed to the folding box cover;
the lock and the handle are respectively arranged on an outer surface of the box head;
the support bar is a straight rod, having a length no greater than a distance between the box head and the box tail;
when the box body is closed, the support bar is contained in the box body;
when the box is opened, one end of each support bar is operable to be inserted into a small hole on the box body, and the other end is operable to be in a flexible connection with the folding box cover; and
the handle is in a flexible connection with the box body.

7. The multifunctional vehicle bumper according to claim 6, wherein the handle is a protruded push-pull handle, wherein when a protruded outer surface of the handle is impacted, the main body of the box body ejects from the opening.

8. The multifunctional vehicle bumper according to claim 1, wherein:
the foldable kitchen utensil comprises a plurality of foldable/deployable support legs and a foldable/deployable support platform;
when the support legs and the support platform are folded, the support legs fold up to sides of the support platform; and
when the support legs and the support platform are deployed, a periphery of the support platform is connected to the plurality of support legs, the support legs being perpendicular to a surface of the support platform.

9. The multifunctional vehicle bumper according to claim 8, wherein:
the support platform comprises a tabletop, a support rack, and a shelf;
a top surface of one end of the support rack is connected to the tabletop, and a side of the other end is connected to one side of the shelf;
the support rack comprises a tabletop support rack and a grill support rack;
the support legs are positioned on peripheries of bottom surfaces of the tabletop support rack and the grill support rack, one side of the tabletop support rack connected to one side of the grill support rack; and
the tabletop support rack is used to support the tabletop, and the grill support rack is used to support the shelf.

10. The multifunctional vehicle bumper according to claim 9, wherein:
the support legs each comprise an upper support sleeve, a lower support bar, and a positioning bolt;
the upper support sleeve covers a top of the lower support bar, and a placement opening section is provided on a sidewall of a lower end of the upper support sleeve in a direction extending along the upper support sleeve; and
the top of the lower support bar is located within the placement opening section, and the positioning bolt can fix the lower support bar at a preset position in the placement opening section.

11. The multifunctional vehicle bumper according to claim 10, wherein:
the support legs each further comprise a leg folding lever;
the leg folding lever comprises an upper connecting rod and a lower lifting bar, each having through-holes at both ends thereof, with a flush mounting slot being provided on a lower edge of the through-hole at a bottom end of the upper connecting rod, extending in an upward direction, and a locking pin being provided on a lower edge of the through-hole at an upper end of the lower lifting bar, extending in an upward direction;
the through-hole at the bottom end of the upper connecting rod and the through-hole at the upper end of the lower lifting bar are pivotally connected via a pivot;
when the upper connecting rod and the lower lifting bar are opened around the pivot, the locking pin on the lower lifting bar engages with the flush mounting slot on the upper connecting rod, aligning the upper connecting rod and the lower lifting bar in a straight line; and
when the upper connecting rod and the lower lifting bar are closed around the pivot, the locking pin on the lower lifting bar disengages from the flush mounting slot on the upper connecting rod, leading the upper connecting rod and the lower lifting bar to rotate in a direction opposite to a direction of opening them around the pivot, thereby folding the upper connecting rod and the lower lifting bar to a closed position.

12. The multifunctional vehicle bumper according to claim 9, wherein:
the support legs are positioned at a bottom of the support platform, a length of the support leg after retraction being no greater than a length of the support platform.

13. The multifunctional vehicle bumper according to claim 1, wherein:
the multifunctional bumper further comprises lateral margins, a box mounting bracket, and a towing device;
the lateral margins are fixed on both sides of the bumper body, protecting corners on a head or a tail of a vehicle;
the box mounting bracket is installed in the opening and fixed to edges of the opening;
a guiding rail is installed in the box mounting bracket, cooperating with a sliding rail on the box body, which is operable to slide along the guiding rail; and
the towing device comprises a towing bar and a towing pad, the towing bar being a straight bar, with its ends fixed to a bottom of the bumper body, and the towing pad fixed to a middle of the towing bar, with an opening thereof facing a direction in which the guiding rails slide out.

14. A vehicle, comprising a vehicle body and the multifunctional vehicle bumper according to any one of claims 1 to 13, wherein the multifunctional vehicle bumper is mounted at a head or a tail of the vehicle body and is arranged protruding outwards.
